(19)

Europäisches Patentamt
European Patent Office
Office européen des brevets

(11) **EP 4 439 395 A1**

(12) **EUROPEAN PATENT APPLICATION**

(43) Date of publication:
**02.10.2024 Bulletin 2024/40**

(21) Application number: **23209678.4**

(22) Date of filing: **14.11.2023**

(51) International Patent Classification (IPC):
**G06N 3/092** (2023.01)      **G06N 10/60** (2022.01)
**G06N 3/084** (2023.01)

(52) Cooperative Patent Classification (CPC):
**G06N 3/092; G06N 10/60; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 US 202318194598**

(71) Applicant: **Fujitsu Limited**
**Kawasaki-shi, Kanagawa 211-8588 (JP)**

(72) Inventors:
• LIU, Xiaoyuan
  **Sunnyvale, California 94085 (JP)**
• KULSHRESTHA, Ankit
  **Sunnyvale, California 94085 (JP)**
• USHIJIMA-MWESIGWA, Hayato
  **Sunnyvale, California 94085 (JP)**

(74) Representative: **Hoffmann Eitle**
**Patent- und Rechtsanwälte PartmbB**
**Arabellastraße 30**
**81925 München (DE)**

(54) **TRAINING QUANTUM NEURAL NETWORKS USING META OPTIMIZATION**

(57)      According to an aspect of an embodiment, operations include receiving a dataset associated with a machine learning task, preparing an input quantum state based on the dataset, and preparing a VQC to function as a QNN. The operations further include executing operations comprising reading content of a state buffer as empty or including past information on parameters of the QNN, selecting parameter values based on the content, preparing an input for an optimizer network based on the parameter values, computing an output by applying the optimizer network on the input, updating the parameter values using the output, and obtaining a current cost function value based on the updated parameter values. The operations further include updating the state buffer using the current cost function value and the updated parameters values and training the QNN until the current cost function value is below a threshold.

100

*FIG. 1*

**Description**

FIELD

The embodiments discussed in the present disclosure are related to training quantum neural networks using meta optimization.

BACKGROUND

Advancements in the field of quantum computing and machine learning have led to the development of hybrid quantum-classical algorithms that allow performing machine learning tasks (such as pattern recognition) using quantum computing. With evolution of machine learning, the scale and complexity of the machine learning tasks have increased. Execution of such machine learning tasks may necessitate an extension from classical domain to quantum domain. The extension may be facilitated by quantum computers which may outperform classical computers (that host classical deep learning models) in terms of computational efficiency, accuracy, or latency, associated with the execution of the machine learning tasks. Even though quantum computing may enable scaling beyond classical approaches, quantum computers may not be competitive with their classical counterparts due to limitations such as high gate noise, limited scaling (to a few hundred qubits), lack of availability of reliable error detection and mitigation algorithms, and so on. To overcome such limitations, researchers have developed quantum-classical algorithms (for example, variational quantum algorithms (VQAs)), which may function as a bridge between the quantum and classical algorithms. The hybrid quantum-classical algorithms may be used to execute complex machine learning tasks of higher scale on the quantum computers based on optimization of the quantum computers using classical computers.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of an embodiment, a method may include a set of operations. The set of operations include receiving a dataset associated with a machine learning task and preparing an input quantum state based on the received dataset. The set of operations may further include preparing a Variational Quantum Circuit (VQC) on a quantum computer to function as a Quantum Neural Network (QNN) and executing operations for a current time-step of a set of time-steps. The operations may include reading content of a state buffer to determine whether the state buffer is empty or includes past information on parameters of the QNN. The operations may further include selecting values for the parameters of the QNN based on the content of the state buffer and preparing an input for an optimizer network based on the selected values of the parameters of the QNN. The operations may further include computing an output by applying the optimizer network on the prepared input, updating the values of the parameters of the QNN based on the computed output, and passing the input quantum state and the updated values of the parameters to the QNN to obtain a current value of a cost function of the QNN from the quantum computer. The set of operations may further include updating the state buffer based on the current value of the cost function and the updated values of the parameters, and training the QNN on the machine learning task by repeating the execution of the operations using the updated values of the parameters of the QNN, until the current value of the cost function of the QNN is below a cost threshold.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an example environment related to training quantum neural networks using meta optimization;

FIG. 2 is a block diagram that illustrates an exemplary system for training quantum neural networks using meta optimization;

FIG. 3 is a diagram that illustrates a flowchart of an example method for training quantum neural networks using meta optimization;

FIG. 4 is a diagram that illustrates an exemplary scenario for generation of updated values of parameters of a quantum neural network and minimization of a cost function of the quantum neural network;
FIG. 5 is a diagram that illustrates an execution pipeline for training quantum neural networks using meta optimization;

all according to at least one embodiment described in the present disclosure.

DESCRIPTION OF EMBODIMENTS

Some embodiments described in the present disclosure relate to methods and systems for training quantum neural networks using meta optimization. Herein, a quantum device (for example, a variational quantum circuit (VQC)) may be prepared on quantum hardware (for example, a quantum computer) to implement a quantum neural network (QNN). For training the QNN, a set of optimized parameters for the VQC may be determined. The determination may be based on an execution of a meta-optimization algorithm on classical hardware. The meta-optimization algorithm may train a meta-optimization network, implemented on the classical hardware, to determine the set of optimized parameters for the VQC such that a meta-loss function associated with the meta-optimization network is minimized. The determined set of optimized parameters may be used to determine an output of the QNN, such that a cost function associated with the QNN is minimized. The cost function may be determined on the quantum computer using the VQC implementing the QNN.

Quantum computing may enable execution of machine learning tasks using a QNN. The QNN may be trained using a training dataset, which may be encoded into quantum states and implemented using a parameterized quantum circuit on quantum hardware. Hybrid quantum-classical algorithms (for example, a variational quantum algorithm (VQA)) may facilitate an optimization of the parameterized quantum circuit (for example, a variational quantum circuit (VQC)) based on determination of an optimal set of parameters for the VQC for execution of the machine learning tasks. Traditionally, the parameterized quantum circuit may be optimized using a gradient-based algorithm (such as gradient descent) that may be executed on classical hardware. The gradient-based algorithm may involve a computation of a gradient with respect to a previously computed cost function associated with the QNN on the quantum hardware. Thereafter, the gradient may be provided to the classical hardware as input for the determination of a set of optimized parameters. Based on the set of optimized parameters, the parameterized quantum circuit may generate an output such that a current cost function associated with the QNN is minimized. However, the computation of the gradient may be non-scalable and may be affected by sampling noise in the quantum hardware.

Further, the computational cost of an optimization problem associated with determination of the optimal set of parameters using gradient-based algorithms may scale by "O(N)", where "N" may be a number of parameters of the VQC. Thus, the optimization of the parameterized quantum circuit (i.e., the VQC) based on the gradient-based algorithms may be challenging due to scaling of the computational cost. A quadratic cost of computation may render infeasible, on the classical hardware, the optimization of the parameterized quantum circuit. Further, in current QNN training regimes, the QNN may function as a black-box that generates a cost function for an optimizer (which may be hosted in the classical hardware and configured to determine the optimized set of parameters for the QNN). Execution of complex machine learning tasks of a higher scale may not be feasible in current generation quantum hardware (for example, Noisy Intermediate Scale Quantum (NISQ) devices) due to constraints of the quantum hardware, such as presence of gate noise, scaling limitations (to a few hundred qubits), lack of availability of reliable error detection and mitigation algorithms, and so on.

According to one or more embodiments of the present disclosure, the technological field of quantum machine learning may be improved by preparing a quantum circuit that may function as a QNN and optimization of the QNN using a neural network-based meta optimization network. The disclosure presents a method and an electronic device that includes a processor for training the QNN to perform a machine learning task. During operation, the electronic device may receive a dataset (for example, a training dataset) associated with a machine learning task. For processing of the dataset using a quantum computer, the dataset may be encoded into an input quantum state. The input quantum state may be prepared based on an application of an encoding circuit on the received dataset. Thereafter, the electronic device may prepare a Variational Quantum Circuit (VQC) on the quantum computer to function as a QNN. The QNN may generate an output quantum state based on a set of parameters associated with the VQC and the input quantum state. Thereafter, the generated output quantum state may be mapped to a classical output. The classical output and a set of labels, that correspond to the received dataset, may be used for determination of a cost function value associated with the QNN. The QNN may be trained based on minimization of the cost function value. The cost function value may be minimized based on determination of optimized values of the set of parameters associated with the VQC.

After the preparation of the VQC, a content of a state buffer may be read. The state buffer may include previously determined values of the set of parameters associated with the VQC, previously determined cost function values associated with the QNN, and previous hidden states associated with a meta-optimizer network. Based on the read content, values for the parameters associated with the VQC may be selected for determination of updated values for the parameters. The selected values may be used for preparation of an input for a meta-optimization algorithm. The meta-optimization algorithm may be executed on the meta-optimizer network to compute an output. The output may be computed based on an application of the meta-optimization network on the prepared input using an optimal set of meta-parameters. The optimal set of meta-parameters may be determined based on minimization of a meta-loss function of the meta-optimizer network. Based on the output of the meta-optimization algorithm, updated values of the set of parameters may be computed. The updated values the set of parameters may be used for obtaining a current value of the cost function. The current value of the cost function may be less than a previously determined value of the cost function. The electronic device may further train the QNN based on an iterative determination of the set of parameters and the cost function (determined using the quantum computer), until the current value of the cost function is minimized to a value which is less than a cost threshold. The minimum possible value of the cost function may be obtained if the determined values of the set of parameters are the optimized values of the set of parameters.

Embodiments of the present disclosure are explained with reference to the accompanying drawings.

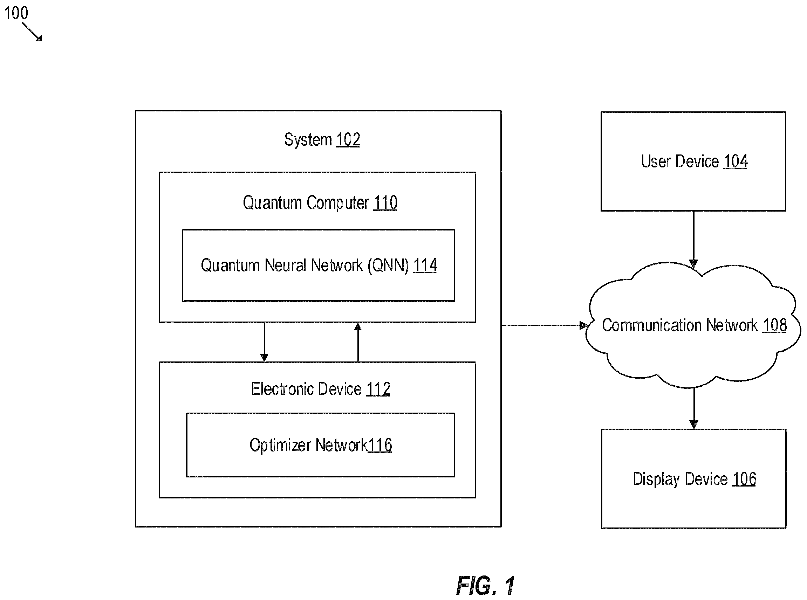

FIG. 1 is a diagram representing an example environment related to training quantum neural networks using meta optimization, in accordance with at least one embodiment described in the present disclosure. With reference to FIG. 1, there is shown a computing environment 100. In the computing environment 100, there is shown a system 102, a user device 104, and a display device 106. The system 102, the user device 104, and the display device 106 may be communicatively coupled to each other, via a communication network 108. The system 102 may include a quantum computer 110 and an electronic device 112. As further shown, a quantum neural network (QNN) 114 may be implemented on the quantum computer 110 and an optimizer network 116 may be implemented on the electronic device 112.

The system 102 may be a part of an on-premises computing environment or a cloud computing environment. The system 102 may include suitable logic, circuitry, and interfaces that may be configured to execute operations associated with training the QNN 114 for performing machine learning tasks. The QNN 114 may be trained using a hybrid quantum-classical algorithm that may allow optimizing a VQC, functioning as the QNN 114, using the optimizer network 116. The optimization of the VQC (i.e., the QNN 114) may correspond to determination of a set of optimized parameters associated with the VQC based on optimal meta-parameters of the optimizer network 116. The system 102 may be configured to determine the optimal meta-parameters by minimizing a meta-loss function associated with the optimizer network 116 such that a cost function associated with the QNN 114 is minimized. The cost function may be minimized based on the determination of the set of optimized parameters associated with the VQC. More specifically, the cost function may be minimized based on an iterative execution of a set of operations corresponding to a set of time-steps. At each-time step, the set of operations may be executed for determination of the set of parameters and the cost function associated with the QNN 114 may be determined. At the end of the set of time-steps (i.e., after a predefined number of iterations of execution of the set of operations), the system 102 may determine the set of optimized parameters that may correspond to a minimum value of the cost function associated with the QNN 114.

The user device 104 may include suitable logic, circuitry, and interfaces that may be configured to render a User Interface (UI) with option(s) to configure and submit a dataset (i.e., input data points and labels corresponding to the input data points) that may be associated with training of the QNN 114. The UI may further render parameters of the QNN 114 and a cost function value associated with the QNN 114, which may be determined at each time-step. The user device 104 may communicate with the system 102 via a network interface. Examples of the user device 104 may include, but are not limited to, a mobile device, a desktop computer, a laptop, a virtual machine, a computer workstation, or a server such as a cloud server.

The display device 106 may include suitable logic, circuitry, and interfaces that may be configured to display inputs provided by the user device 104 and outputs generated by the system 102. In certain embodiments, the display device 106 may enable a user to provide a user input via the display device 106. The display device 106 may be realized through several known technologies such as, but not limited to, a Liquid Crystal Display (LCD) display, a Light Emitting Diode (LED) display, a plasma display, or an Organic LED (OLED) display technology, or other display devices. In accordance with an embodiment, the display device 106 may refer to a display screen of a head mounted device (HMD), a smart-glass device, a see-through display, a projection-based display, an electro-chromic display, or a transparent display.

The communication network 108 may include a communication medium through which the system 102, the user device 104, and the display device 106 may communicate with each other. The communication network 108 may be one of a wired connection or a wireless connection. Examples of the communication network 108 may include, but are not limited to, the Internet, a cloud network, Cellular or Wireless Mobile Network (such as Long-Term Evolution and 5G New Radio), a Wireless Fidelity (Wi-Fi) network, a Personal Area Network (PAN), a Local Area Network (LAN), or a Metropolitan Area Network (MAN). Various devices in the computing environment 100 may be configured to connect to the communication network 108 in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

The quantum computer 110 may be a gate-based quantum computer that may be configured to receive an input and transform the input in accordance with a unitary operation (that may be defined as a sequence of quantum logic gate operations and measurements). The operation may be represented by the VQC that may be prepared on quantum computer 110 to function as the QNN 114.

In one or more embodiments of the disclosure, the quantum computer 110 may be implemented as a generalized quantum computing device that may be hosted on a cloud optimization system. The cloud optimization system may be implemented as one of a private cloud, a public cloud, or a hybrid cloud. In such an implementation, the generalized quantum computing device may use specialized optimization solving software applications or simulation software at an application layer to implement hybrid quantum-classical algorithms for reception of a set of optimized parameters associated with the QNN 114 from the optimizer network 116, and optimization of the VQC (functioning as the QNN 114) based on the set of optimized parameters.

The generalized quantum computing device may be different from a digital bit-based computing device, such as digital devices that are based on transistor-based digital circuits. The generalized quantum computing device may include one or more quantum logic gates that use quantum bits (hereinafter referred to as "qubits") to perform computations for different information processing applications. In general, a qubit can represent "0", "1", or a superposition of both "0" and "1". In most cases, the generalized quantum computing device may need a carefully controlled cryogenic environment to function properly. The generalized quantum computing device may use certain properties found in quantum mechanical systems, such as quantum fluctuations, quantum superposition of Eigenstates, quantum tunneling, and quantum entanglement. These properties may help the generalized quantum computing device to perform computations for solving certain mathematical problems to exhibit quantum advantage. Typically, these problems may be computationally intractable for conventional computing devices (e.g., classical computers that use transistor-based circuits). Examples of the generalized quantum computing device may include, but are not limited to, a siliconbased nuclear spin quantum computer, a trapped ion quantum computer, a cavity quantumelectrodynamics (QED) computer, a quantum computer based on nuclear spins, a quantum computer based on electron spins in quantum dots, a superconducting quantum computer that uses superconducting loops and Josephson junctions, and a nuclear magnetic resonance quantum computer.

In some other embodiments, the quantum computer 110 may be a special-purpose quantum computer that may be designed, and hardware/software optimized to perform quantum machine learning tasks. Similar to a generalized quantum computing device, the special-purpose quantum computer may use qubits and may require a carefully controlled cryogenic environment to function properly.

In some other embodiments, the quantum computer 110 may be a digital quantumcomputing processor. More specifically, the quantum computer 110 may be implemented as a quantum simulation software that may be executable on a digital computer with a semiconductor-based processor. The quantum simulation software may be designed to model the functionality of the quantum computer 110 on digital circuitry. The digital computer may operate at room temperature and may not require a cryogenic environment to function.

In some other embodiments, the quantum computer 110 may include a processor to execute software instructions such as subroutines for the VQC functioning as the QNN 114. Example implementations of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof.

The electronic device 112 may include suitable logic, circuitry, and interfaces that may be configured to execute program instructions associated with the optimizer network 116. The electronic device 112 may be a classical computer (i.e., a transistor-based computer with semiconductor-based digital circuitry) that operates in tandem or in conjunction with the quantum computer 110 to train the QNN 114 to perform machine learning tasks.

The QNN 114 (i.e., the VQC) may correspond to a computational routine (i.e., a set of instructions) that combines coherent quantum operations on quantum data, such as qubits with real-time classical computations. The VQC may include an ordered series of quantum logic gates, measurements, and resets that may be all be conditioned on real-time classical computation and may use data gathered from classical computation. In accordance with an embodiment, the VQC may be a parameterized quantum circuit that includes a set of quantum logic gates for operators (e.g., phase and mixing operators) and a set of qubits (e.g., logical qubits that represent physical qubits) on which the operators and the quantum logic gates may be configured to operate. The quantum logic gates may include, for example, one or more Hadamard gates, Rx and Rz gates (i.e., Rotation Operators), and a CNOT gate. The ansatz may vary depending on the dataset that may be used to train the QNN 114.

The optimizer network 116 may be a software program. a routine, or a subroutine which, when executed by the electronic device 112, may compute values for parameters of the VQC (functioning as the QNN 114) based on a value of a cost function associated with the QNN 114. The optimizer network 116 may be similar to an optimizer used in machine learning. The optimizer network 116 may define a hyper-surface (i.e., a cost landscape), and the optimizer's task may be to navigate the landscape and find a global maxima (or minima) on the hyper-surface. Examples of the optimizer network 116 may include, but are not limited to, a Long-Short Term Memory (LSTM) network associated with meta-parameters and configured to maintain a hidden state of the LSTM network. The usage of the LSTM network as the optimizer network 116 may enable optimization of the VQC in the quantum computer 110 without using gradient-based algorithms.

In operation, the system 102 may receive a dataset associated with a machine learning task. In accordance with an embodiment, the received dataset may be used to train the QNN 114 to perform the machine learning task (such as classification, clustering, reinforcement machine learning, discriminative machine learning, or so on) and may include a set of datapoints and a set of labels that correspond to the set of datapoints. By way of example, and not limitation, the set of datapoints may belong to an Iris dataset, a Gaussian 2D dataset, and a Spirals 2D dataset. The QNN 114 may have to be trained to predict a label for each datapoint of the dataset and an unseen datapoint of a new dataset different from the received dataset.

The system 102 may prepare an input quantum state based on the received dataset. In accordance with an embodiment, an encoding circuit may be applied on the received dataset for preparation of the input quantum state. The encoding circuit may encode each component of each datapoint of the set of datapoints (i.e., the received dataset) into a quantum state. For example, if each datapoint includes "D" components (i.e., each data point is "D" dimensional data vector), the encoding circuit may encode a corresponding data point into an input quantum state comprising "log(D)" qubits.

The system 102 may further prepare a VQC on the quantum computer 110 that may function as the QNN 114. The VQC may be a parameterized quantum circuit that functions as the QNN 114. The preparation of the VQC may be based on formation of a composition of a predefined number of unitary gates. Thus, the VQC, functioning as the QNN 114, may be represented as a product of a predefined number of parameterized unitary matrices. The unitary gates of the VQC may be parameterized using real-valued parameters (i.e., the parameters of the QNN 114). The prepared VQC may function as a trained QNN (for example, the QNN 114), configured to perform machine learning tasks, based on determination of optimum real-values for the parameters and the parameterization of the unitary gates using the determined optimum real-values. The prepared VQC may generate a quantum output based on the optimum values of the parameters and the input quantum state. The quantum output may be scalarized and a cost function of the QNN 114 may be determined based on the set of labels and the scalarized quantum output. The training of the QNN 114 may be determined as complete if the cost function is minimized to a global minimum value.

The system 102 may execute, for a current time-step of a set of time-steps, operations. In accordance with an embodiment, the system 102 may minimize a meta-loss function associated with the optimizer network 116 such that the cost function is minimized over the set of time-steps (for example, a finite time window). The operations may be executed a predefined number of times over the set of time-steps and may include reading content of a state buffer to determine whether the state buffer is empty or includes past information on the parameters of the QNN 114. The state buffer may be empty if the operations are executed for the first time. The state buffer may include past information based on a determination that past values of the parameters of the QNN 114, past values of the cost function for the QNN 114, and past values of a hidden state of the optimizer network 116 are included in the state buffer. The past values parameters of the QNN 114, the cost function, and the hidden state may be determined at time-steps (of the set of time-steps) that precede the current time-step. The state buffer may include past information based on inclusion of a cost function difference corresponding to a difference between values of the cost function determined at consecutive time-steps that precede the current time-step in the set of time-steps.

The operations may further include selecting values for the parameters of the QNN 114 based on the content. If the state buffer is empty, the selected values may include initial values of the parameters of the QNN 114 and an initialized value of a hidden state of the optimizer network 116. Further, the cost function difference may be selected is "1". If the state buffer is not empty, the selected values may include values of the parameters of the QNN 114 determined at a time-step preceding the current time-step, a value of the cost function difference determined based on values of the cost function obtained at two consecutive time-steps preceding the current time-step, and a value of a hidden state of the optimizer network 116 determined at a time-step preceding the current time-step. The selected values of the parameters may be those values for which a lowest value of the cost function of the QNN 114 may be obtained.

The operations may further include preparing an input for the optimizer network 116 based on the selected values of the parameters of the QNN 114. In accordance with an embodiment, the input may be prepared based on a concatenation of the selected values of the parameters of the QNN 114 and the selected value of the cost function difference, a non-linear function that may normalize the concatenation, and a parameter that may control a strength of normalization applied by the non-linear function. The non-linear function may be applied on the concatenation for generation of a normalized output (i.e., a normalized concatenation). Thereafter, a ratio of an outcome of the normalized output and the parameter may be determined for the preparation of the input. The prepared input may be provided to the optimizer network 116 for determination of updated parameters of the QNN 114. The input provided to the optimizer network 116 may further include a selected value of the hidden state (e.g., a hidden state of LSTM network) of the optimizer network 116.

The operations may further include computing an output by applying the optimizer network 116 on the prepared input. The output may be computed further based on the selected value of the hidden state of the optimizer network 116. The operations may further include updating the values of the parameters of the QNN 114 based on the computed output. In accordance with an embodiment, the values of the parameters of the QNN 114 may be updated based on values of the parameters of the QNN 114 that may be determined at a previous time-step of the set of time-steps, a hyper-parameter, and a result that may be obtained based on an application of a non-linear activation function on the computed output. The system 102 may further control a strength of the update (of the values of the parameters of the QNN 114) based on the hyper-parameter. The optimizer network 116 may further generate an updated value of the hidden state of the optimizer network 116.

The operations may further include passing the input quantum state and the updated values of the parameters to the QNN 114 to obtain a current value of the cost function of the QNN 114 from the quantum computer 110. The unitary gates of the VQC (functioning as the QNN 114) may be parameterized using the updated values of the parameters of the QNN 114. The QNN 114 may generate a quantum output based on an application of the QNN 114 on the updated values of the parameters and the input quantum state. The system 102 may scalarize the generated quantum output and determine the current value of the cost function based on the set of labels and the scalarized quantum output.

The system 102 may update the state buffer based on the current value of the cost function and the updated values of the parameters. The update may correspond to an inclusion of the current value of the cost function and the updated values of the parameters in the state buffer. The state buffer may be updated further based on the updated value of the hidden state of the optimizer network 116 and a cost function difference that corresponds to a difference between a value of the cost function determined at the current time-step and a value of the cost function determined at the preceding time-step of the set of time-steps. The update may, thus, further correspond to inclusion of the updated value of the hidden state and the cost function difference in the state buffer.

The system 102 may train the QNN 114 on the machine learning task by repeating the execution of the operations using the updated values, until the current value of the cost function of the QNN 114 is below a cost threshold. The current value of the cost function of the QNN 114 may be below the cost threshold if the cost function is minimized after the repeated execution of the operations over the set of time-steps. The minimization may be such that the current value of the cost function is equal to or less than a set global minimum value. At this stage, the training phase of the QNN 114 may be identified as complete.

Modifications, additions, or omissions may be made to FIG. 1 without departing from the scope of the present disclosure. For example, the network environment 100 may include more or fewer elements than those illustrated and described in the present disclosure.

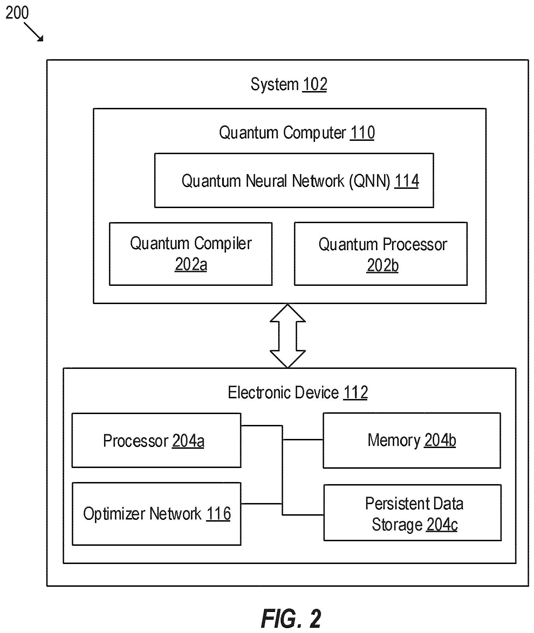

FIG. 2 is a block diagram that illustrates an exemplary system for training quantum neural networks using meta optimization, in accordance with at least one embodiment described in the present disclosure. FIG. 2 is explained in conjunction with elements from FIG. 1. With reference to FIG. 2, there is shown a block diagram 200 of the system 102. The system 102 may include the quantum computer 110 and the electronic device 112. As shown, for example, the quantum computer 110 may be a gate-based quantum computer that includes the QNN 114 (i.e., the VQC), a quantum compiler 202a, and a quantum processor 202b. Similarly, the electronic device 112 may be a transistor-based computer (i.e., a classical computer) that includes a processor 204a, a memory 204b, a persistent data storage 204c, and the optimizer network 116. In certain embodiments, the optimizer network 116 may be stored in the memory 204b. The quantum processor 202b and the processor 204a may be referred to as one or more processors of the system 102.

Typically, a compiler is a computer program that is configured to translate computer code between two languages, i.e., source and target languages, since quantum algorithms require error-free qubits and logic gates, the quantum compiler 202a may be configured to translate quantum gate operations used in quantum into machine level operations and reduce loss of quantum information because of decoherence. A compiler for a gate-based quantum computer may perform synthesis of quantum gates at both physical and logical layers. The quantum compiler 202a may operate on sequence of instructions (for example, the QNN 114 or the VQC) to ensure that such instructions are executable on the quantum computer 110. Such instructions may utilize quantum instruction sets to turn high-level algorithms into physical instructions that may be executable on the quantum processor 202b.

The quantum processor 202b (also referred to as a quantum processing unit (QPU) may refer to a physical device (for example, a chip) that may include a set of interconnected qubits. The quantum processor 202b may typically include a housing environment (e.g., a cooling mechanism to achieve cryogenic temperature), a control system for the quantum processor 202b, and the like.

Although not illustrated, the quantum computer 110 may have a hierarchical architecture with layers such as a physical layer, a virtual layer, an error correction layer, a logical layer, and an application layer. The physical layer may include hardware including, but not limited to, physical qubits and control operations. The virtual layer may incorporate error cancellation and may be responsible for collecting quantum dynamics of qubits and shaping them into virtual qubits and quantum gates. The error correction layer may incorporate quantum error correction logic for fault-tolerant quantum computing. The logical layer may support universal quantum computing by acting as a hardwareindependent layer. The application layer may be a hardware independent layer that relies on logical qubits. The application layer may receive quantum algorithm as a sequence of high-level operations, including the QNN 114.

The processor 204a may include suitable logic, circuitry, and/or interfaces that may be configured to execute program instructions associated with different operations to be executed by the system 102. The processor 204a may include any suitable special-purpose or general-purpose computer, computing entity, or processing device including various computer hardware or software modules and may be configured to execute instructions stored on any applicable computer-readable storage media. For example, the processor 204a may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 204a may include any number of processors configured to, individually or collectively, perform or direct performance of any number of operations of the system 102, as described in the present disclosure.

In some embodiments, the processor 204a may be configured to interpret and/or execute program instructions and/or process data stored in the memory 204b and/or the persistent data storage 204c. In some embodiments, the processor 204a may fetch program instructions from the persistent data storage 204c and load the program instructions in the memory 204b. After the program instructions are loaded into memory 204b, the processor 204a may execute the program instructions. Some of the examples of the processor 204a may be a GPU, a CPU, a RISC processor, an ASIC processor, a CISC processor, a co-processor, and/or a combination thereof.

The memory 204b may include suitable logic, circuitry, and/or interfaces that may be configured to store program instructions executable by the processor 204a. In certain embodiments, the memory 204b may be configured to store a dataset associated with a machine learning task, parameters associated with the QNN 114 (i.e., the VQC), and values of cost function associated with the QNN 114 (i.e., the VQC). The memory 204b may include computer-readable storage media for carrying or having computer-executable instructions or data structures stored thereon. Such computer-readable storage media may include any available media that may be accessed by a general-purpose or special-purpose computer, such as the processor 204a.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204a to perform a certain operation or group of operations associated with the system 102.

The persistent data storage 204c may include suitable logic, circuitry, and/or interfaces that may be configured to store program instructions executable by the processor 204a, operating systems, and/or application-specific information, such as logs and application-specific databases. The persistent data storage 204c may be configured to store information, such as the set of mathematical formulations associated with the optimization of the parameters of the QNN 114 (i.e., the VQC) and meta-parameters associated with the optimizer network 116. The persistent data storage 204c may include computer-readable storage media for carrying or having computer-executable instructions or data structures stored thereon. Such computer-readable storage media may include any available media that may be accessed by a general-purpose or special-purpose computer, such as the processor 204a.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204a to perform a certain operation or group of operations associated with the system 102.

Modifications, additions, or omissions may be made to the system 102 without departing from the scope of the present disclosure. For example, in some embodiments, the system 102 may include any number of other components that may not be explicitly illustrated or described.

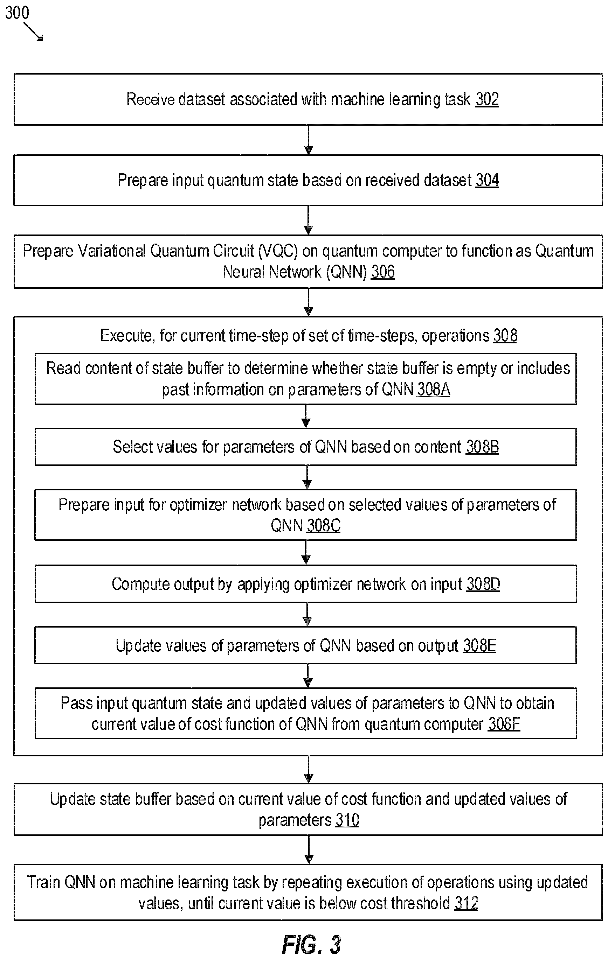

FIG. 3 is a diagram that illustrates a flowchart of an example method for training quantum neural networks using meta optimization, in accordance with at least one embodiment described in the present disclosure. FIG. 3 is described in conjunction with elements from FIG. 1 and FIG. 2. With reference to FIG. 3, there is shown a flowchart 300. The method illustrated in the flowchart 300 may start at 302 and may be performed by any suitable system, apparatus, or device, such as, by the example system 102 of FIG. 1, or the processor 204a of FIG. 2. Although illustrated with discrete blocks, the steps and operations associated with one or more of the blocks of the flowchart 300 may be divided into additional blocks, combined into fewer blocks, or eliminated, depending on the implementation.

At 302, a dataset associated with a machine learning task may be received. In an embodiment, the processor 204a may be configured to receive the dataset associated with the machine learning task. The dataset may be a training dataset (such as Iris dataset, Gaussian 2D dataset, or Spirals 2D dataset) that may be used to train a QNN (for example, the QNN 114) to perform the machine learning task (such as classification, clustering, reinforcement machine learning, discriminative machine learning, or so on). For example, the dataset "D" may include "m" samples and may be represented as $D = \{x_l, y_l\} \; \forall \; l \in (1\text{-}m)$. Each sample may include a datapoint "xl" and a corresponding label "yl". The QNN 114 may be trained to generate an output based on an input datapoint. The output may be compared with, for example, a ground truth to measure a cost per datapoint.

At 304, an input quantum state may be prepared based on the received dataset. In an embodiment, the processor 204 may be configured to prepare the input quantum state based on the received dataset. The preparation may be based on application of an encoding circuit on the received dataset. The application may enable processing of the received dataset by the quantum computer 110. The prepared input state may be: $|\Psi\rangle = U_o(x_i)|0\rangle$, where $U_o(x_i) = e^{-ix_iG}$, may be a unitary that may encode each component of a "d" dimensional data vector into the input quantum state comprising "$q = \log(d)$" qubits. The "d" dimensional data vector may be representative of a datapoint "$x_l$" included in the received dataset. Further, "G" may be a quantum gate of a parameterized quantum circuit in the quantum computer 110 that may generate a Hermitian matrix.

At 306, a VQC may be prepared on the quantum computer 110 to function as the QNN 114. In an embodiment, the processor 204a may be configured to prepare the VQC on the quantum computer 110 to function as the QNN 114. The preparation of the VQC may be based on formation of a composition of unitary gates. The VQC may be a product of "n" parameterized unitary matrices. Each unitary matrix may represent a unitary gate and the product may represent the composition of the unitary gates. A parameterized unitary matrix may be represented as "$U_i(\theta_l)$" and the VQC may be represented as: $U(\theta) = \prod_{i=1}^{n} U_i(\theta_I)$ where "U" may be a unitary matrix parameterized by $\theta = \{\theta_i\} \; \forall \; l \in 1\text{-}n$ and "$\theta$" may correspond to parameters of the VQC (i.e., the QNN 114). The QNN 114, implemented by the prepared VQC, may be represented as $f_\theta(x, \theta) = \langle 0|\overline{U}_0(x)\overline{U}(\theta)\hat{O}U(\theta)U_0(x)|0\rangle$, where "$\hat{O}$" may be a quantum observable that may map a quantum output, generated by the QNN 114, into a scalar output and "$\overline{U}$" may be a complex conjugate of the unitary matrix "U".

In accordance with an embodiment, the processor 204a may initialize the parameters of the QNN 114 with initial values "$\theta^t$" and determine "$f_{\theta t}(x, \theta^t)$" based on the input quantum state and the initialized parameters. Thereafter, the processor 204a may determine an error $\|y - f_{\theta t}(x, \theta^t)\|$ and compute an initial value of a cost function of the QNN 114 based on the error. The initial value of a cost function may be computed based on a mean squared error over the received dataset. Thus, the initial value of a cost function may be represented as: $C(\theta^t) = \frac{1}{m}\sum_{i=1}^{m} \left\|y_i - f_{\theta t}(x_I, \theta^t)\right\|_2^2$. The processor 204a may store the initial value of the cost function in the memory 204b.

The cost function of the QNN 114 may be updated (i.e., minimized from the initial cost function value) by updating of the parameters of the QNN 114. The processor 204a may obtain a cost function minima based on optimized values for the parameters. The cost function of the QNN 114 may be obtained at any time-step based on equation (1) as follows:

$$C(\theta) = \frac{1}{m}\sum_{i=1}^{m} \left\|y_i - f_\theta(x_i, \theta)\right\|_2^2 \qquad (1)$$

where,

C(θ) may represent the cost function of the QNN 114

m may represent a size of, or number of samples, in the dataset "D"

$y_I$ may represent an $i^{th}$ label that may correspond to an $i^{th}$ input datapoint in the dataset "D", and $f_\theta(x_i, \theta)$ may represent an output of the QNN 114.

The processor 204a may be configured to determine θ* (optimized parameter values) using the optimizer network 116 for minimization of the cost function. The cost function of the QNN 114 obtained at each time-step may be stored in the memory 204b as past values of the cost function.

At 308, operations may be executed for a current time-step of a set of time-steps. In an embodiment, the processor 204a may be configured to execute the operations for the current time-step of the set of time-steps. The operations may be executed for updating the parameters of the QNN 114 (using the optimizer network 116) and (minimizing) the cost function of the QNN 114 (using equation (1)) at each time-step of the set of time-steps.

At 308A, content of the state buffer may be read. In an embodiment, the processor 204a may be configured to read the content of the state buffer to determine whether the state buffer is empty or includes past information on parameters of the QNN 114. The processor 204a may instantiate a state buffer based on an initialization of the parameters of the QNN 114. The state buffer may be a double-sided queue that may be empty when the parameters of the QNN 114 are initialized with the initial values, i.e., the current time-step is the first time-step of the set of time-steps. The state buffer may include past information on the parameters of the QNN 114, which may be based on execution of the operations at time-steps that precede the current time-step. The past information, included in the state buffer, may correspond to one or more past values of the parameters of the QNN 114 that may be determined at one or more time-steps of the set of time-steps which precede the current time-step. The past information may further correspond to past values of a hidden state of the optimizer network 116 that may be determined at one or more time-steps which precede the current time-step. The state buffer may further include one or more past values of the cost function that may be determined at one or more time-steps of the set of time-steps which precede the current time-step. The state buffer may further include a cost function difference value associated with past cost function values that may be determined at two consecutive time-steps of the set of time-steps which precede the current time-step.

At 308B, values for the parameters of the QNN 114 may be selected based on the read content. In an embodiment, the processor 204a may be configured to select the values for the parameters of the QNN 114. The initial values used for initialization of the parameters of the QNN 114 may be selected as the values for the parameters based on a determination that the state buffer is empty. Whereas, if it is determined that the state buffer includes the past information on the parameters of the QNN 114, then the selection of the values for the parameters of the QNN 114 may be performed by sampling past values of the parameters of the QNN 114 included in the state buffer. The sampling may be performed using a sampling function, which may return past values of the parameters determined at a time-step that precede the current time-step. The past values of the parameters returned by the sampling function may be selected as the values for the parameters. The returned past values may be those values of the parameters, for which a corresponding past value of the cost function of the QNN 114 may be the lowest. The corresponding past value of the cost function may be lowest amongst past values of the cost function that may be determined at other preceding time-steps.

The sampling function may further return a past value of a hidden state of the optimizer network 116 that may be determined at a time-step preceding the current time-step, and a cost function difference that may be determined based on past cost function values obtained at two consecutive time-steps preceding the current time-step., The past value of a hidden state and the cost function difference may be returned based on a determination that the state buffer includes the past information.

At 308C, an input for the optimizer network 116 may be prepared. In an embodiment, the processor 204a may be configured to prepare the input for the optimizer network 116 based on the selected values of the parameters of the QNN 114. The input for the optimizer network 116 may be prepared further based on the cost function difference that may be returned by the sampling function. The cost function difference may be initialized to "1" if the state buffer is empty or if the current time-step is the first time-step of the set of time-steps. If the state buffer includes the past information, then the processor 204a may retrieve past values of the cost function, obtained at two consecutive time-steps that immediately precede the current time-step of the set of time-steps. Thereafter, a difference between the past values of the cost function may be computed. The computed difference may correspond to the cost function difference returned by the sampling function.

The processor 204a may further construct an input vector by concatenating the computed difference between the past values of the cost function and the selected values of the parameters of the QNN 114. The input for the optimizer network 116 may be prepared based on an application of an exponential scaling to the input vector and a normalization factor. The application of an exponential scaling may result in generation of a normalized vector. The exponential scaling may normalize the input vector such that each component of the input vector is in a range [0,1]. The normalization factor may control a strength of the normalization achieved due to the exponential scaling. For example, the normalization factor may be 50. The prepared input for the optimizer network 116 may be a ratio of the normalized vector and the normalization factor.

In accordance with an embodiment, the optimizer network 116 may be a Long-Short Term Memory (LSTM) network. The LSTM network may be associated with meta-parameters and may be configured to maintain a hidden state of the LSTM network. The input for the optimizer network 116 may further include the hidden state of the LSTM network. The hidden state of the LSTM network may correspond to an initialized value of the hidden state of the optimizer network 116 if the state buffer is empty or if the current time-step is the first time-step of the set of time-steps. Whereas the hidden state of the LSTM network may correspond to a past value of the hidden state of the optimizer network 116. The sampling function may return the past value of the hidden state of the optimizer network 116 based on a determination that the state buffer includes the past information.

At 308D, an output of the optimizer network 116 may be computed. In an embodiment, the processor 204a may be configured to compute the output of the optimizer network 116 based on application of the optimizer network 116 on the prepared input. The output may be computed further based on the hidden state of the LSTM network. The computed output may be used for determination of updated parameters of the QNN 114 at the current time-step. The optimizer network 116 or the LSTM network may further compute a current value of the hidden state of the LSTM network (i.e., the optimizer network 116).

At 308E, the values of the parameters of the QNN 114 may be updated. In an embodiment, the processor 204a may be configured to update the values of the parameters of the QNN 114 based on the computed output. The initial values of the parameters may be updated if the current time-step is the first time-step. Otherwise, past values of the parameters (determined at a time-step preceding the current time-step) may be updated.

For updating the initial values or the past values of the parameters of the QNN 114, the computed output may be transformed by applying a non-linear activation function on the computed output of the optimizer network 116. For example, the non-linear activation may be a hyperbolic tangent function ("tanh ()"). Thereafter, the processor 204a may multiply the transformed output with a value of a learning rate parameter to generate update values for the current time-step. The learning rate parameter may control a strength of an update of a parameter of the QNN 114. The processor 204a may further add the generated update values to the selected values of the parameters of the QNN 114 (i.e., the initial values of the parameters or the past values of the parameters determined at a time-step preceding the current time-step) at the current time-step to determine the updated values of the parameters of the QNN 114. By way of example, and not limitation, the values of the parameters of the QNN 114 may be updated based on equation (2), which is given as follows:

$$\theta^{t+1} = \theta^t + a \times \sigma(\Omega_u^t) \qquad (2)$$

where

$\theta^t$ may represent the selected values of the parameters of the QNN 114 in the current time-step,
$\sigma$ may represent the non-linear activation function,
$\Omega_u^t$ may represent the computed output of the optimizer network 116,
a may represent learning rate parameter, and
$\theta^{t+1}$ may represent the updated values of the parameters of the QNN 114.

At 308F, the input quantum state and the updated values of the parameters of the QNN 114 may be passed to the QNN 114 to obtain a current value of the cost function of the QNN 114. In an embodiment, the processor 204a may be configured to pass the input quantum state and the updated values of the parameters to the QNN 114 to obtain the current value of the cost function of the QNN 114 from the quantum computer 110. Specifically, the processor 204a may compute "$f_{\theta t+1}$ (x, $\theta^{t+1}$)" based on the input quantum state and the updated values of the parameters of the QNN 114. Thereafter, the processor 204a may obtain the current value of the cost function of the QNN 114 by computing a mean square error with respect to the received dataset. The mean square error may represent a square of a comparison (difference) between a ground truth ($y_i$) and $f_\theta$ ($x_i$, $\theta^{t+1}$). By way of example, and not limitation, the current value of the cost function may be obtained from the quantum computer 110 using equation (3), which is given as follows:

$$C\left(\theta^{t+1}\right) = \frac{1}{m}\sum_{i=1}^{m} \left\| y_i - f_\theta\left(x_i, \theta^{t+1}\right) \right\|_2^2 \qquad (3)$$

where

C ($\theta^{t+1}$) may represent the current value of the cost function
m may represent a size of, or number of samples, in the dataset "D"
$y_I$ may represent a $i^{th}$ label corresponding to an $i^{th}$ input datapoint in the dataset "D",and
$f_\theta$ ($x_i$, $\theta^{t+1}$) may represent an output of the QNN 114.

At 310, the state buffer may be updated. In an embodiment, the processor 204a may be configured to update the state buffer based on the current value of the cost function and the updated values of the parameters. For updating the state buffer, the processor 204a may compare the current value of the cost function "C ($\theta^{t+1}$)" for the current time-step with a past value (or the initialized value) of the cost function (for example, C($\theta^t$)) for a time-step that precedes the current time-step of the set of time-steps. The past value of the cost function may be present in the memory 204b of the electronic device 112. The processor 204a may retrieve the past value (or the initialized value) of the cost function from the memory 204b for the comparison. The state buffer may be updated to include the current value of the cost function and the updated values of the parameters ($\theta^{t+1}$) based on the comparison. The current value of the cost function and the updated values of the parameters may be included in the state buffer if the current value of the cost function C($\theta^{t+1}$) is determined to be less than the past value (or the initialized value) of the cost function (C($\theta^t$)). Additionally, the state buffer may be updated at the current time-step (or each time-step of the set of time-steps) to include the current value of the hidden state of the optimizer network 116 and a cost function difference value. The cost function difference value may correspond to a difference between the current value of the cost function C($\theta^{t+1}$) and the past value (or the initialized value) of the cost function (C($\theta^t$)).

At 312, the QNN 114 may be trained on the machine learning task. In an embodiment, the processor 204 may be configured to train the QNN 114 on the machine learning task by repeating the execution of the operations (i.e., 308A-308F) using the updated values of the parameters of the QNN 114, until the current value of the cost function is determined to be below a cost threshold (or a global minimum value). The training of the QNN 114 may continue for a duration "T". Thus, the duration "T" may elapse during the execution of the operations for the set of time-steps. The parameters of the QNN 114 may be updated and the value of cost function of the QNN 114 may be minimized based on the execution of the operations at each time-step. The repetition of the operations throughout the duration may result in minimization of the cost function such that a current value of the cost function is below the cost threshold. The QNN 114 may be considered as trained (or VQC parameters are optimized) for performing the machine learning task if the value of the cost function (after a specific time step) is below the cost threshold.

Although the flowchart 300 is illustrated as discrete operations, such as 302, 304, 306, 308, 308A, 308B, 308C, 308D, 308E, 308F, 310, and 312. However, in certain embodiments, such discrete operations may be further divided into additional operations, combined into fewer operations, or eliminated, depending on the implementation without detracting from the essence of the disclosed embodiments.

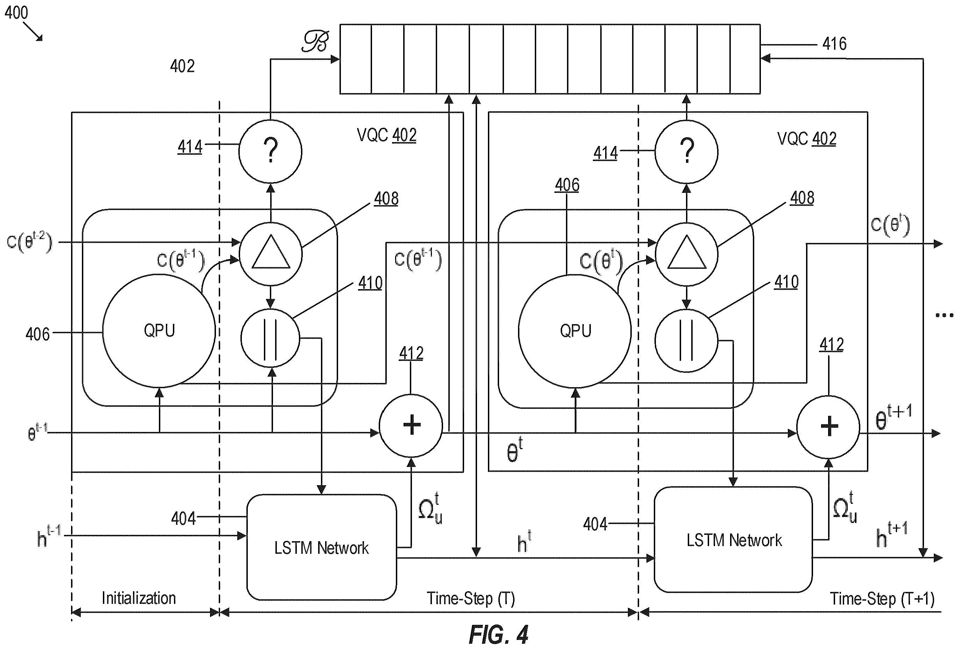

FIG. 4 is a diagram that illustrates an exemplary scenario for generation of updated values of parameters of a quantum neural network and minimization of a cost function of the quantum neural network, in accordance with at least one embodiment described in the present disclosure. FIG. 4 is described in conjunction with elements from FIG. 1, FIG. 2, and FIG. 3. With reference to FIG. 4, there is shown an exemplary scenario 400. In the exemplary scenario 400, there is shown a block diagram 402 of meta-learning approach for training the QNN 114 and an LSTM network 404. The LSTM network 404 may be an exemplary implementation of the optimizer network 116 of FIG. 1. The diagram 402 may include a quantum processing unit (QPU) 406, which may be an exemplary implementation of the quantum processor 202b of FIG.2. During operation, the QPU 406 may execute a VQC (i.e., the QNN 114), which may be a parametrized quantum circuit that may include a set of quantum gates in a specific arrangement. The set of quantum gates may represent a set of operations that may be performed on a set of qubits of a quantum computer (such as the quantum computer 110).

In the diagram 402, there is further shown a first gate 408, a second gate 410, a third gate 412, and a fourth gate 414, each illustrated with a different symbol in FIG. 4 to show a different operation. The first gate 408 may represent a delta calculation operation, the second gate 410 may represent a concatenation operation, the third gate 412 may be an update gate that may represent an operation to update the values of the parameters of the QNN 114, and the fourth gate 414 may be a condition-true gate that may represent an operation to compare a current value of the cost function with a past value of the cost function.

There is further shown a state buffer 416 that may include past information on parameters of the QNN, past values of the cost function, past values of the hidden state of the LSTM network 404, and a cost function difference value. The cost function difference value may be computed based on a difference between a current value of the cost function obtained for a current time-step and a past value of the cost function obtained for a time-step preceding the current time-step. The state buffer 416 may be updated if the current value of the cost function is determined to be less than the past value of the cost function. Whereas the state buffer 416 may not be updated if the current value of the cost function is determined to be greater than the past value of the cost function. This may be because, if the current value of the cost function is greater than the past value of the cost function, then parameters of the QNN 114 (which may be determined based on an output of the LSTM network 404) may not be optimum. Consequently, the parameters of the QNN 114 may not be included in the state buffer 416.

In accordance with an embodiment, at time-step 't' (i.e., a current time-step), the processor 204a may be configured to initialize parameters of the QNN 114 using initial values. The QNN 114 may include a set of parameters that may be initialized using a set of initial values. The set of parameters and may be represented as: $\theta=\{\theta_1, \theta_2, \theta_3,...,\theta_N\}$.

Each quantum gate of the set of quantum gates may be parameterized based on a parameter of the set of parameters.

The set of parameters initialized using the initial values may be represented as $\theta^{t-1} = \left\{\theta_1^{t-1}, \theta_2^{t-1}, \theta_3^{t-1}, \dots, \theta_N^{t-1}\right\}$. The initialized set of parameters may be updated based on an output of the LSTM network 404 (i.e., a meta-optimizer). Once the set of parameters of the QNN 114 are initialized using "$\theta^{t-1}$", the QPU 406 may generate an output based on the initialized set of parameters "$\theta^{t-1}$" and a set of datapoints included in a training dataset. The training dataset may be received by the QNN 114 and transformed into input quantum states for generation of the output based on the initialized set of parameters "$\theta^{t-1}$". Thereafter, a value of the cost function of the QNN 114 may be determined based on a set of labels (included in the training dataset) corresponding to the set of datapoints and the initialized set of parameters $\theta^{t-1}$. The value of the cost function may correspond to the initial value of the cost function and may be represented by $C(\theta^{t-1})$. The cost function difference value $\Delta C(\theta)$ may be initialized as "1". The QPU 406 may not store $\theta^{t-1}$, $C(\theta^{t-1})$, and $\Delta C(\theta)$ (i.e., the initialized cost function difference value), in the state buffer 416.

Input for the LSTM network 404 may be prepared based on $\theta^{t-1}$, $\Delta C(\theta)$, and a normalization factor. The second gate 410 may perform concatenate $\theta^{t-1}$ and $\Delta C(\theta)$ for the preparation. Based on an application of the LSTM network 404 on the prepared input and an initial value of the hidden state (i.e., $h^{t-1}$) of the LSTM network 404, an output may be computed. Further, an updated value of the hidden state may be generated based on such application. The output may be represented by $\Omega_u^t$ and the updated value of the hidden state may be represented by h'. Thereafter, the set of parameters may be updated based on the $\theta^{t-1}$, $\Omega_u^t$, $\sigma$, and a. The updated values of the set of parameters at a time-step 't' may be represented using $\theta^t = \left\{\theta_1^t, \theta_2^t, \theta_3^t, \dots, \theta_N^t\right\}$. The updated values of the set of parameters may be determined using the third gate 412.

The updated values of the set of parameters (i.e., $\theta^t$) and an input quantum state (prepared based on the set of datapoints) may be passed to the QNN 114 (i.e., the QPU 406) as an input. Based on such input, a current value of the cost function may be obtained. The current value of the cost function may be represented by $C(\theta^t)$ and may be compared with $C(\theta^{t-1})$ using the first gate 408. Thereafter, it may be determined, by use of the fourth gate 414, whether $C(\theta^t)$ is less than $C(\theta^{t-1})$. If it is determined that $C(\theta^t)$ is less than $C(\theta^{t-1})$, then the state buffer 416 may be updated. The update may correspond to inclusion of $C(\theta^t)$, $h^t$, $\theta^t$, and $\Delta C(\theta)$ (i.e., the outcome of comparison of $C(\theta^t)$ and $C(\theta^{t-1})$) in the state buffer 416. The parameters in $\theta^t$ may be optimum compared to the parameters in $\theta^{t-1}$ since updating of the set of parameters of the QNN 114 (from $\theta^{t-1}$ to $\theta^t$) has led to the minimization of the cost function (from $C(\theta^{t-1})$ to $C(\theta^t)$).

In accordance with an embodiment, at time-step 't+1', $C(\theta^t)$ may be a past value of the cost function, $\theta^t$ may represent past values of the set of parameters (or past information on the set of parameters of the QNN 114), and $h^t$ may be a past value of the hidden state of the LSTM network 404. The QPU 406 may read content of the state buffer 416 and select $\theta^t$ and $\Delta C(\theta)$ from the state buffer 416. Thereafter, an input for the LSTM network 404 may be prepared based on $\theta^t$, $\Delta C(\theta)$ (i.e., the outcome of comparison of $C(\theta^t)$ and $C(\theta^{t-1})$), and the normalization factor. Based on an application of the LSTM network 404 on the prepared input and the past value of the hidden state (i.e., $h^t$) of the LSTM network 404, an output may be computed. Further, an updated value of the hidden state may be generated based on such application. The output may be represented as $\Omega_u^{t+1}$ and the updated value of the hidden state may be represented as $h^{t+1}$. Thereafter, the set of parameters may be updated based on the $\theta^t$, $\Omega_u^{t+1}$, $\sigma$, and a. The updated values of the set of parameters at time-step 't+1' may be represented as $\theta^{t+1} = \left\{\theta_1^{t+1}, \theta_2^{t+1}, \theta_3^{t+1}, \dots, \theta_N^{t+1}\right\}$.

It should be noted that the scenario 400 of FIG. 4 is for exemplary purposes and should not be construed as limiting the scope of the disclosure.

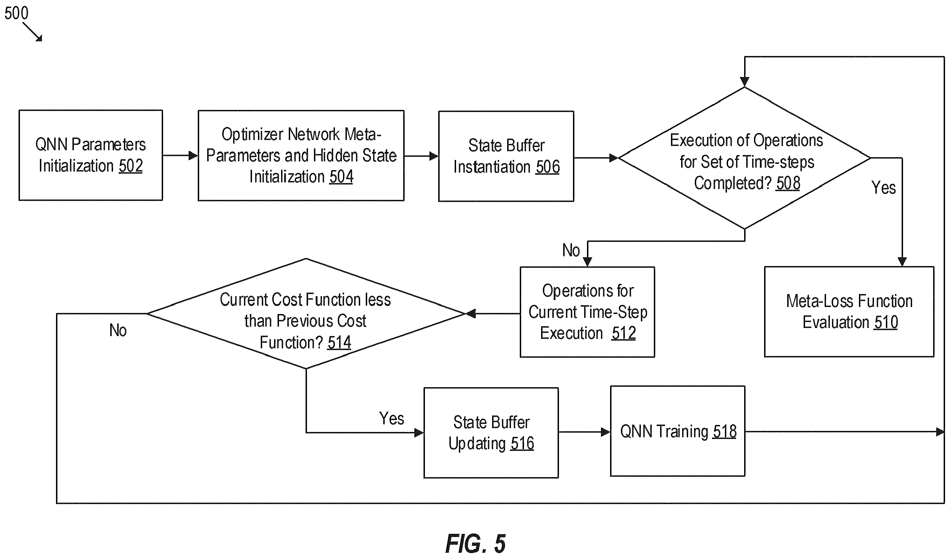

FIG. 5 is a diagram that illustrates an execution pipeline for training quantum neural networks using meta optimization, in accordance with at least one embodiment described in the present disclosure. FIG. 5 is described in conjunction with elements from FIG. 1, FIG. 2, FIG. 3, and FIG. 4. With reference to FIG. 5, there is shown an execution pipeline 500. The exemplary execution pipeline 500 may include a set of operations (for example, operations from 502 to 518) that may be executed by one or more components of FIG. 1, such as the system 102. The set of operations may be performed by the processor 204a of the system 102.

At 502, parameters of a QNN (for example, the QNN 114) may be initialized. In at least one embodiment, the processor 204a may be configured to initialize the parameters of the QNN 114. The QNN 114 may be implemented by a VQC. The VQC may be a parameterized quantum circuit that includes a predefined number of unitary gates. The VQC may be represented as a product of a predefined number of parameterized unitary matrices corresponding to the predefined number of unitary gates. Each parameterized unitary matrix may be a function of a parameter of the QNN 114. Thus, the VQC (i.e., the QNN 114) may be parameterized based on the parameters of the QNN 114. The QNN 114 may be trained to perform a machine learning task based on an optimization of the parameters of the QNN 114. For optimization of the parameters, the processor 204a may initialize the parameters of the QNN 114 at a first time-step of the set of time-steps and update values of the parameters based on past values of the parameters in subsequent time-steps using the optimizer network 116. Based on the initialization of the parameters, an efficiency of training the QNN 114 may be improved, and a latency involved in training the QNN 114 may be reduced. Further, a cost function minima that may be achievable based on the optimization of the parameters may depend on the initialization of the parameters of the QNN 114.

At 504, meta-parameters and a hidden state of the optimizer network 116 may be initialized. In at least one embodiment, the processor 204a may be configured to initialize the meta-parameters of the optimizer network 116 and the hidden state of the optimizer network 116. The meta-parameters may be initialized with meta-parameter values before the execution of the operations (i.e., 308A-308F). The optimizer network 116 may be the LSTM network that may be associated with meta-parameters (i.e., the meta-parameters of the optimizer network 116) and may be configured to maintain a hidden state of the LSTM network (i.e., the hidden state of the optimizer network 116). The meta-parameters may be initialized using initial values and the hidden state may be initialized using a normal distribution. Such an initialization may enable the LSTM network and the hidden state to be trainable such that a meta-loss function of the LSTM network converges to an efficient minima.

The LSTM network may compute an output indicative of updated parameters of the QNN 114 based on input meta-features and adjustment of the meta-parameters of the LSTM network from the initial values. At a first time-step of the set of time-steps, the input meta-features may be the initial values of the parameters of the QNN 114 and an initial cost function difference value (i.e., "1"). In subsequent time-steps, the input meta-features may be determined based on past values of the parameters of the QNN 114 and a cost function difference value associated with past values of the cost function of the QNN 114. The meta-parameters of the LSTM network may be adjusted (from the initial value) during the training of the LSTM network. The processor 204a may train the LSTM network based on the meta-loss function during the set of time-steps. For a training dataset (for example, the dataset associated with a machine learning task (see 302)) and the prepared VQC functioning as the QNN 114, the meta-loss function may be minimized for generation of a trained LSTM network during the set of time-steps. The minimization of the meta-loss function may enable determination of optimal meta-parameters. Based on the optimal meta-parameters, the parameters of the QNN 114 may be updated such that the cost function of the QNN 114 is minimized (i.e., the QNN 114 is trained to perform the machine learning task). Thus, the LSTM network may output the parameters for the parameterization of the VQC (functioning as the QNN 114).

At 506, the state buffer may be instantiated. In at least one embodiment, the processor 204a may be configured to instantiate the state buffer based on the initialization of the parameters of the QNN 114. The state buffer may be empty when the parameters of the QNN 114 are initialized with the initial values. At each time-step, based on determination of updated values of the parameters of the QNN 114 and a value of the cost function of the QNN 114 determined for a corresponding time-step, the state buffer may be updated. The update may correspond to inclusion of the updated values of the parameters and the value of the cost function. Thus, with elapsing of the time-steps of the set of time-steps, the state buffer may be updated to include past information that corresponds to past values of the parameters of the QNN 114 and past values of the cost function. With elapsing of the time-steps the state buffer may further updated to include a cost function difference value associated with the past values of the cost function that may be obtained at two consecutive time-steps preceding a current time-step, and past values of the hidden state of the LSTM network.

At 508, it may be determined whether the execution of operations (i.e., 308A-308F) for the set of time-steps is completed. In at least one embodiment, the processor 204a may be configured to determine whether the execution of operations is completed.

At 510, the meta-loss function may be evaluated. In at least one embodiment, the processor 204a may be configured to evaluate the meta-loss function based on a determination that the execution of operations (i.e., 308A-308F) for the set of time-steps is completed. The meta-loss function may be evaluated for the optimizer network 116 (i.e., the LSTM network) after an end of the set of time-steps (i.e., after the execution of the operations 308A-308F for each time-step of the set of time-steps) based on a value of the cost function that may be obtained for each time-step of the set of time-steps. The meta-loss function may be evaluated further based on a weight value associated with each value of the cost function obtained at each time-step. By way of example, and not limitation, the meta-loss function may be evaluated using equation (4), which is given as follows:

$$L(\emptyset) = \sum_{t=1}^{T} w_t C\left(\theta^t\right) \qquad (4)$$

where,

"ø" may represent the meta-parameters of the LSTM network,
"$w_t$" may represent weights associated with value of the cost function obtained at "$t^{th}$" time step of the set of time steps, and
"$C(\theta^t)$" may represent the value of the cost function obtained at the "$t^{th}$" time step.

The set of time steps may include "T" time-steps. The processor 204a may update the meta-parameter values based on an evaluated value of the meta-loss function. The meta-parameter values may be updated if the evaluated value of the meta-loss function is not minimized to an expected value. Based on the updated meta-parameter values, the operations (i.e., 308A-308F) may be executed again for the set of time-steps. Whereas the training phase of the QNN 114 may be determined to be complete in case the evaluated value of the meta-loss function is minimized to the expected value.

At 512, the operations (i.e., 308A-308F), for a current time-step of the set of time-steps, may be executed. In at least one embodiment, the processor 204 may be configured to execute the operations (i.e., 308A-308F), for the current time-step. The execution may be based on a determination that the execution of operations (i.e., 308A-308F) for the set of time-steps is not completed.

At 514, it may be determined whether a current value of the cost function is less than a past value of the cost function. In at least one embodiment, the processor 204 may be configured to determine whether the current value of the cost function, obtained based on the execution of the operations (i.e., 308A-308F) for the current time-step, is less than the past value of the cost function that may be obtained at a time-step of the set of time-steps that precedes the current time-step. The processor 204a may determine whether the execution of operations (i.e., 308A-308F) for the set of time-steps is completed (508), if the current value of the cost function is greater than the past value of the cost function.

At 516, the state buffer may be updated. In at least one embodiment, the processor 204 may be configured to update the state buffer based on a determination that the current value of the cost function is less than the past value of the cost function. The update may correspond to an inclusion of the current value of the cost function in the state buffer as a past value of the cost function. The update may further correspond to an inclusion of a current value of the hidden state of the LSTM network, and updated values of the parameters of the QNN 114, in the state buffer. The updated values of the parameters may be determined based on execution of operation 308E for the current time-step and may be stored as past information on the parameters of the QNN 114.

Based on the update of the state buffer, input meta-features, to be provided to the LSTM network, may be determined. The input meta-features may be determined if the current time-step is not the last time-step of the set of time-steps. The determined input meta-features may be used for preparation of an input for the LSTM network (i.e., execution of operation 308C) for a time-step that is subsequent to the current time-step.

At 518, the QNN 114 may be trained. In at least one embodiment, the processor 204 may be configured to train the QNN 114 based on the updating of the state buffer. The training of the QNN 114 may be based on the current value of the cost function, a past value of the cost function obtained at a time-step preceding the current time-step, and past values of the parameters stored in the state buffer. If the current time-step is the last time-step of the set of time-steps, the meta-loss function may be evaluated (510). The processor 204a may determine whether the current time-step is the last time-step based on a determination of whether the execution of operations (i.e., 308A-308F) for the set of time-steps is completed (508).

Various embodiments of the disclosure may provide one or more non-transitory computer-readable storage media configured to store instructions that, in response to being executed, cause an electronic device (such as, the electronic device 112) to perform a set of operations. The set of operations may include receiving a dataset associated with a machine learning task. The set of operations may further include preparing an input quantum state based on the received dataset. The set of operations may further include preparing a VQC on a quantum computer (such as, the quantum computer 110) to function as a QNN (such as, the QNN 114). The set of operations may further include executing, for a current time-step of a set of time-steps, operations. The operations may include reading content of a state buffer to determine whether the state buffer is empty or includes past information on parameters of the QNN 114, selecting values for the parameters of the QNN 114 based on the content, preparing an input for an optimizer network (such as, the optimizer network 116) based on the selected values of the parameters of the QNN 114, computing an output by applying the optimizer network 116 on the input, updating the values of the parameters of the QNN 114 based on the output, and passing the input quantum state and the updated values of the parameters to the QNN 114 to obtain a current value of a cost function of the QNN 114 from the quantum computer 110. The set of operations may further include updating the state buffer based on the current value of the cost function and the updated values of the parameters. The set of operations may further include training the QNN 114 on the machine learning task by repeating the execution of the operations using the updated values of the parameters, until the current value of the cost function is below a cost threshold.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

Further embodiments are as follows:

1. A method, executable by a processor of an electronic device, comprising:

receiving a dataset associated with a machine learning task;
preparing an input quantum state based on the received dataset;
preparing a Variational Quantum Circuit (VQC) on a quantum computer to function as a Quantum Neural Network (QNN);
executing, for a current time-step of a set of time-steps, operations comprising:

reading content of a state buffer to determine whether the state buffer is empty or includes past information on parameters of the QNN;
selecting values for the parameters of the QNN based on the content;
preparing an input for an optimizer network based on the selected values of the parameters of the QNN;
computing an output by applying the optimizer network on the input;
updating the values of the parameters of the QNN based on the output; and
passing the input quantum state and the updated values of the parameters to the QNN to obtain a current value of a cost function of the QNN from the quantum computer;

updating the state buffer based on the current value of the cost function and the updated values of the parameters; and

training the QNN on the machine learning task by repeating the execution of the operations using the updated values of the parameters, until the current value of the cost function is below a cost threshold.

2. The method according to embodiment 1, further comprising:

initializing the parameters of the QNN with initial values before the execution of the operations; and instantiating the state buffer based on the initialization of the parameters, wherein the state buffer is a double-sided queue that is empty when the parameters of the QNN are initialized with the initial values.

3. The method according to embodiment 1, wherein the selection of the values for the parameters of the QNN is performed by sampling past values of the parameters of the QNN included in the state buffer, and wherein the sampling is performed based on the determination that the state buffer includes the past information on the parameters of the QNN.

4. The method according to embodiment 1, further comprising:

retrieving past values of the cost function obtained for two consecutive time-steps that precede the current time-step of the set of time-steps; computing a difference between the past values; constructing an input vector by concatenating the difference and the selected values of the parameters; and preparing the input for the optimizer network based on an application of an exponential scaling to the input vector and a normalization factor.

5. The method according to embodiment 1, wherein the optimizer network is a Long-Short Term Memory (LSTM) network that is associated with meta-parameters and is configured to maintain a hidden state of the LSTM network.

6. The method according to embodiment 5, wherein the input for the optimizer network further includes the hidden state of the LSTM network.

7. The method according to embodiment 1, wherein the values of the parameters of the QNN are updated by:

transforming the output by applying a non-linear activation function on the output of the optimizer network; multiplying the transformed output with a value of a learning rate parameter to generate update values for the current time-step; and adding the update values to the selected values of the parameters of the QNN in the current time-step.

8. The method according to embodiment 1, wherein the state buffer further includes past values of the cost function for one or more time-steps which precede the current time-step, and the past information corresponds to past values of the parameters of the QNN for one or more time-steps which precede the current time-step.

9. The method according to claim 1, further comprising comparing the current value of the cost function for the current time-step with a past value of the cost function for a time-step that precedes the current time-step of the set of time-steps, wherein

the past value is included in a memory of the electronic device, and the state buffer is updated to include the current value of the cost function and the updated values of the parameters based on the comparison.

10. The method according to embodiment 1, further comprising:

initializing meta-parameters of the optimizer network with meta-parameter values before the execution of the operations; evaluating a meta-loss function for the optimizer network after an end of the set of time-steps based on a value of the cost function obtained for each time-step of the set of time-steps; and updating the meta-parameter values based on the meta-loss function.

11. The method according to embodiment 1, wherein the VQC is a parametrized quantum circuit that includes a set of quantum gates in a specific arrangement, and the set of quantum gates represents a set of operations to be performed on a set of qubits of the quantum computer.

12. A non-transitory computer-readable storage medium configured to store instructions that, in response to being executed, causes an electronic device to perform operations, the operations comprising:

receiving a dataset associated with a machine learning task;
preparing an input quantum state based on the dataset;
preparing a Variational Quantum Circuit (VQC) on a quantum computer to function as a Quantum Neural Network (QNN);
executing, for a current time-step of a set of time-steps, operations comprising:

reading content of a state buffer to determine whether the state buffer is empty or includes past information on parameters of the QNN;
selecting values for the parameters of the QNN based on the content;
preparing an input for an optimizer network based on the selected values of the parameters of the QNN;
computing an output by applying the optimizer network on the input;
updating the values of the parameters of the QNN based on the output; and
passing the input quantum state and the updated values of the parameters to the QNN to obtain a current value of a cost function of the QNN from the quantum computer;

updating the state buffer based on the current value of the cost function and the updated values of the parameters; and
training the QNN on the machine learning task by repeating the execution of the operations using the updated values of the parameters, until the current value of the cost function is below a cost threshold.

13. The non-transitory computer-readable storage medium according to embodiment 12, wherein the operations comprise:

initializing the parameters of the QNN with initial values before the execution of the operations; and
instantiating the state buffer based on the initialization of the parameters,
wherein the state buffer is a double-sided queue that is empty when the parameters of the QNN are initialized with the initial values.

14. The non-transitory computer-readable storage medium according to embodiment 12, wherein the selection of the values for the parameters of the QNN is performed by sampling past values of the parameters of the QNN included in the state buffer, and
wherein the sampling is performed based on the determination that the state buffer includes the past information on the parameters of the QNN.

15. The non-transitory computer-readable storage medium according to embodiment 12, wherein the operations comprise:

retrieving past values of the cost function obtained for two consecutive time-steps that precede the current time-step of the set of time-steps;
computing a difference between the past values;
constructing an input vector by concatenating the difference and the selected values of the parameters; and
preparing the input for the optimizer network based on application of an exponential scaling to the input vector and a normalization factor.

16. The non-transitory computer-readable storage medium according to embodiment 12, wherein the optimizer network is a Long-Short Term Memory (LSTM) network that is associated with meta-parameters and is configured to maintain a hidden state of the LSTM network.

17. The non-transitory computer-readable storage medium according to embodiment 12, wherein the values of the parameters of the QNN are updated by:

transforming the output by applying a non-linear activation function on the output of the optimizer network;
multiplying the transformed output with a value of a learning rate parameter to generate update values for the current time-step; and
adding the update values to the selected values of the parameters of the QNN in the current time-step.

18. The non-transitory computer-readable storage medium according to embodiment 12, wherein the operations comprise comparing the current value of the cost function for the current time-step with a past value of the cost function for a time-step that precedes the current time-step of the set of time-steps, wherein

the past value is included in a memory of the electronic device, and
the state buffer is updated to include the current value of the cost function and the updated values of the parameters based on the comparison.

19. The non-transitory computer-readable storage medium according to embodiment 12, wherein the operations comprise:

initializing meta-parameters of the optimizer network with meta-parameter values before the execution of the operations;
evaluating a meta-loss function for the optimizer network after an end of the set of time-steps based on a value of the cost function obtained for each time-step of the set of time-steps; and
updating the meta-parameter values based on the meta-loss function.

20. An electronic device, comprising:

a memory configured to store instructions; and
a processor coupled to the memory and configured to execute the instructions to perform a process comprising:

receiving a dataset associated with a machine learning task;
preparing an input quantum state based on the received dataset;
preparing a Variational Quantum Circuit (VQC) on a quantum computer to function as a Quantum Neural Network (QNN);
executing, for a current time-step of a set of time-steps, operations comprising:

reading content of a state buffer to determine whether the state buffer is empty or includes past information on parameters of the QNN;
selecting values for the parameters of the QNN based on the content;
preparing an input for an optimizer network based on the selected values of the parameters of the QNN;
computing an output by applying the optimizer network on the input;
updating the values of the parameters of the QNN based on the output; and
passing the input quantum state and the updated values of the parameters to the QNN to obtain a current value of a cost function of the QNN from the quantum computer;

updating the state buffer based on the current value of the cost function and the updated values of the parameters; and

training the QNN on the machine learning task by repeating the execution of the operations using the updated values of the parameters, until the current value of the cost function is below a cost threshold.

## Claims

1. A method, executable by a processor of an electronic device, comprising:

receiving a dataset associated with a machine learning task;
preparing an input quantum state based on the received dataset;
preparing a Variational Quantum Circuit (VQC) on a quantum computer to function as a Quantum Neural Network (QNN);
executing, for a current time-step of a set of time-steps, operations comprising:

reading content of a state buffer to determine whether the state buffer is empty or includes past information on parameters of the QNN;
selecting values for the parameters of the QNN based on the content;
preparing an input for an optimizer network based on the selected values of the parameters of the QNN;
computing an output by applying the optimizer network on the input;
updating the values of the parameters of the QNN based on the output; and

passing the input quantum state and the updated values of the parameters to the QNN to obtain a current value of a cost function of the QNN from the quantum computer;

updating the state buffer based on the current value of the cost function and the updated values of the parameters; and

training the QNN on the machine learning task by repeating the execution of the operations using the updated values of the parameters, until the current value of the cost function is below a cost threshold.

2. The method according to claim 1, further comprising:

initializing the parameters of the QNN with initial values before the execution of the operations; and instantiating the state buffer based on the initialization of the parameters, wherein the state buffer is a double-sided queue that is empty when the parameters of the QNN are initialized with the initial values.

3. The method according to claim 1, wherein the selection of the values for the parameters of the QNN is performed by sampling past values of the parameters of the QNN included in the state buffer, and wherein the sampling is performed based on the determination that the state buffer includes the past information on the parameters of the QNN.

4. The method according to claim 1, further comprising:

retrieving past values of the cost function obtained for two consecutive time-steps that precede the current time-step of the set of time-steps;

computing a difference between the past values;

constructing an input vector by concatenating the difference and the selected values of the parameters; and preparing the input for the optimizer network based on an application of an exponential scaling to the input vector and a normalization factor.

5. The method according to claim 1, wherein the optimizer network is a Long-Short Term Memory (LSTM) network that is associated with meta-parameters and is configured to maintain a hidden state of the LSTM network.

6. The method according to claim 5, wherein the input for the optimizer network further includes the hidden state of the LSTM network.

7. The method according to claim 1, wherein the values of the parameters of the QNN are updated by:

transforming the output by applying a non-linear activation function on the output of the optimizer network;

multiplying the transformed output with a value of a learning rate parameter to generate update values for the current time-step; and

adding the update values to the selected values of the parameters of the QNN in the current time-step.

8. The method according to claim 1, wherein the state buffer further includes past values of the cost function for one or more time-steps which precede the current time-step, and the past information corresponds to past values of the parameters of the QNN for one or more time-steps which precede the current time-step.

9. The method according to claim 1, further comprising comparing the current value of the cost function for the current time-step with a past value of the cost function for a time-step that precedes the current time-step of the set of time-steps, wherein

the past value is included in a memory of the electronic device, and the state buffer is updated to include the current value of the cost function and the updated values of the parameters based on the comparison.

10. The method according to claim 1, further comprising:

initializing meta-parameters of the optimizer network with meta-parameter values before the execution of the operations;

evaluating a meta-loss function for the optimizer network after an end of the set of time-steps based on a value of the cost function obtained for each time-step of the set of time-steps; and

updating the meta-parameter values based on the meta-loss function.

11. The method according to claim 1, wherein the VQC is a parametrized quantum circuit that includes a set of quantum gates in a specific arrangement, and

the set of quantum gates represents a set of operations to be performed on a set of qubits of the quantum computer.

12. A non-transitory computer-readable storage medium configured to store instructions that, in response to being executed, causes an electronic device to perform operations, the operations comprising:

receiving a dataset associated with a machine learning task;

preparing an input quantum state based on the dataset;

preparing a Variational Quantum Circuit (VQC) on a quantum computer to function as a Quantum Neural Network (QNN);

executing, for a current time-step of a set of time-steps, operations comprising:

reading content of a state buffer to determine whether the state buffer is empty or includes past information on parameters of the QNN;

selecting values for the parameters of the QNN based on the content;

preparing an input for an optimizer network based on the selected values of the parameters of the QNN;

computing an output by applying the optimizer network on the input;

updating the values of the parameters of the QNN based on the output; and

passing the input quantum state and the updated values of the parameters to the QNN to obtain a current value of a cost function of the QNN from the quantum computer;

updating the state buffer based on the current value of the cost function and the updated values of the parameters; and

training the QNN on the machine learning task by repeating the execution of the operations using the updated values of the parameters, until the current value of the cost function is below a cost threshold.

13. The non-transitory computer-readable storage medium according to claim 12,

wherein the operations comprise:

initializing the parameters of the QNN with initial values before the execution of the operations; and

instantiating the state buffer based on the initialization of the parameters,

wherein the state buffer is a double-sided queue that is empty when the parameters of the QNN are initialized with the initial values; or

wherein the selection of the values for the parameters of the QNN is performed by sampling past values of the parameters of the QNN included in the state buffer, and

wherein the sampling is performed based on the determination that the state buffer includes the past information on the parameters of the QNN; or

wherein the operations comprise:

retrieving past values of the cost function obtained for two consecutive time-steps that precede the current time-step of the set of time-steps;

computing a difference between the past values;

constructing an input vector by concatenating the difference and the selected values of the parameters; and

preparing the input for the optimizer network based on application of an exponential scaling to the input vector and a normalization factor; or

wherein the optimizer network is a Long-Short Term Memory (LSTM) network that is associated with meta-parameters and is configured to maintain a hidden state of the LSTM network; or

wherein the values of the parameters of the QNN are updated by:

transforming the output by applying a non-linear activation function on the output of the optimizer network;
multiplying the transformed output with a value of a learning rate parameter to generate update values for the current time-step; and
adding the update values to the selected values of the parameters of the QNN in the current time-step; or

wherein the operations comprise comparing the current value of the cost function for the current time-step with a past value of the cost function for a time-step that precedes the current time-step of the set of time-steps, wherein

the past value is included in a memory of the electronic device, and
the state buffer is updated to include the current value of the cost function and the updated values of the parameters based on the comparison.

14. The non-transitory computer-readable storage medium according to claim 12, wherein the operations comprise:

initializing meta-parameters of the optimizer network with meta-parameter values before the execution of the operations;
evaluating a meta-loss function for the optimizer network after an end of the set of time-steps based on a value of the cost function obtained for each time-step of the set of time-steps; and
updating the meta-parameter values based on the meta-loss function.

15. An electronic device, comprising:

a memory configured to store instructions; and
a processor coupled to the memory and configured to execute the instructions to perform a process comprising:

receiving a dataset associated with a machine learning task;
preparing an input quantum state based on the received dataset;
preparing a Variational Quantum Circuit (VQC) on a quantum computer to function as a Quantum Neural Network (QNN);
executing, for a current time-step of a set of time-steps, operations comprising:

reading content of a state buffer to determine whether the state buffer is empty or includes past information on parameters of the QNN;
selecting values for the parameters of the QNN based on the content;
preparing an input for an optimizer network based on the selected values of the parameters of the QNN;
computing an output by applying the optimizer network on the input;
updating the values of the parameters of the QNN based on the output; and
passing the input quantum state and the updated values of the parameters to the QNN to obtain a current value of a cost function of the QNN from the quantum computer;

updating the state buffer based on the current value of the cost function and the updated values of the parameters; and
training the QNN on the machine learning task by repeating the execution of the operations using the updated values of the parameters, until the current value of the cost function is below a cost threshold.

100

System 102

Quantum Computer 110

Quantum Neural Network (QNN) 114

Electronic Device 112

Optimizer Network 116

User Device 104

Communication Network 108

Display Device 106

FIG. 1

200

System 102

Quantum Computer 110

Quantum Neural Network (QNN) 114

Quantum Compiler 202a

Quantum Processor 202b

Electronic Device 112

Processor 204a

Memory 204b

Optimizer Network 116

Persistent Data Storage 204c

FIG. 2

300

Receive dataset associated with machine learning task 302

Prepare input quantum state based on received dataset 304

Prepare Variational Quantum Circuit (VQC) on quantum computer to function as Quantum Neural Network (QNN) 306

Execute, for current time-step of set of time-steps, operations 308

Read content of state buffer to determine whether state buffer is empty or includes past information on parameters of QNN 308A

Select values for parameters of QNN based on content 308B

Prepare input for optimizer network based on selected values of parameters of QNN 308C

Compute output by applying optimizer network on input 308D

Update values of parameters of QNN based on output 308E

Pass input quantum state and updated values of parameters to QNN to obtain current value of cost function of QNN from quantum computer 308F

Update state buffer based on current value of cost function and updated values of parameters 310

Train QNN on machine learning task by repeating execution of operations using updated values, until current value is below cost threshold 312

*FIG. 3*

*FIG. 4*

500

QNN Parameters Initialization 502

Optimizer Network Meta-Parameters and Hidden State Initialization 504

State Buffer Instantiation 506

Execution of Operations for Set of Time-steps Completed? 508

Yes → Meta-Loss Function Evaluation 510

No → Operations for Current Time-Step Execution 512

Current Cost Function less than Previous Cost Function? 514

Yes → State Buffer Updating 516 → QNN Training 518

No

FIG. 5

Europäisches
Patentamt

European
Patent Office

Office européen
des brevets

**EUROPEAN SEARCH REPORT**

Application Number

EP 23 20 9678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Verdon Guillaume ET AL: "Learning to learn with quantum neural networks via classical neural networks", arXiv (Cornell University), 11 July 2019 (2019-07-11), XP093149910, Ithaca DOI: 10.48550/arxiv.1907.05415 Retrieved from the Internet: URL:https://arxiv.org/pdf/1907.05415.pdf [retrieved on 2024-04-10] * page 1 – page 11, right-hand column, paragraph 1 * | 1-15 | INV. G06N3/092 G06N10/60 ADD. G06N3/084 |
| A | Chen Yutian ET AL: "Learning to Learn without Gradient Descent by Gradient Descent", arXiv.org, 12 June 2017 (2017-06-12), XP093150153, Ithaca DOI: 10.48550/arxiv.1611.03824 Retrieved from the Internet: URL:https://arxiv.org/pdf/1611.03824.pdf [retrieved on 2024-04-10] * page 1 – page 4, right-hand column, paragraph 4 * | 1-15 | |
| A | Wilson Max ET AL: "Optimizing quantum heuristics with meta-learning", arXiv (Cornell University), 8 August 2019 (2019-08-08), XP093149424, Ithaca DOI: 10.48550/arxiv.1908.03185 Retrieved from the Internet: URL:https://arxiv.org/pdf/1908.03185.pdf [retrieved on 2024-04-09] * page 1 – page 11, right-hand column, paragraph 2 * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 11 April 2024 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/243454 A1 (1QB INF TECH INC [CA]) 9 December 2021 (2021-12-09) * abstract; claims 1-33; figures 1-7 * * paragraph [0004] – paragraph [0143] * ----- | 1-15 | |
| A | RENXIN ZHAO ET AL: "A review of Quantum Neural Networks: Methods, Models, Dilemma", ARXIV.ORG, CORNELL UNIVERSITY LIBRARY, 201 OLIN LIBRARY CORNELL UNIVERSITY ITHACA, NY 14853, 4 September 2021 (2021-09-04), XP091052139, * page 1 – page 12, right-hand column, paragraph 2 * ----- | 1-15 | |
| A | MICHAEL BROUGHTON ET AL: "TensorFlow Quantum: A Software Framework for Quantum Machine Learning", ARXIV.ORG, CORNELL UNIVERSITY LIBRARY, 201 OLIN LIBRARY CORNELL UNIVERSITY ITHACA, NY 14853, 26 August 2021 (2021-08-26), XP091021845, * Chapter V * ----- | 1-15 | |
| X,P | KULSHRESTHA ANKIT ET AL: "Learning to Optimize Quantum Neural Networks Without Gradients", 2023 IEEE INTERNATIONAL CONFERENCE ON QUANTUM COMPUTING AND ENGINEERING (QCE), IEEE, vol. 1, 17 September 2023 (2023-09-17), pages 263-271, XP034478836, DOI: 10.1109/QCE57702.2023.00037 [retrieved on 2023-11-30] * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 11 April 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 9678**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-04-2024**

| Patent document cited in search report | | Publication date | Patent family member(s) | | Publication date |
|---|---|---|---|---|---|
| WO 2021243454 | A1 | 09-12-2021 | AU | 2021285093 A1 | 08-12-2022 |
| | | | CA | 3177422 A1 | 09-12-2021 |
| | | | EP | 4162414 A1 | 12-04-2023 |
| | | | JP | 2023528881 A | 06-07-2023 |
| | | | US | 2023104058 A1 | 06-04-2023 |
| | | | WO | 2021243454 A1 | 09-12-2021 |

EPO FORM P0459

For more details about this annex : see Official Journal of the European Patent Office, No. 12/82